# DEMANDE DE BREVET EUROPEEN

(11) **EP 3 505 604 A1**
(43) Date de publication de la demande: **03.07.2019**
(21) Numéro de dépôt: 18215534.1
(22) Date de dépôt: 21.12.2018
(51) Int. Cl.: C10L 5/06, C10L 5/36

(54) **INSTALLATION DE PRODUCTION DE GRANULÉS**

(30) Priorité: 28.12.2017 FR 1771436
(71) Demandeur: Green Research, 14200 Herouville Saint-Clair (FR)
(72) Inventeur: SAIAH, Redouan, 93400 SAINT OUEN (FR); ZAKI, Oussama, 76100 ROUEN (FR); JOUIN, Patrick, 14340 MANERBE (FR)
(74) Mandataire: Hege, Frédéric

(57) **Abrégé**

La présente invention concerne une installation de production de granulés à partir de matières organiques, comprenant une unité de réception, le cas échéant une unité de mélange, une unité de granulation, une unité de refroidissement, une unité de conditionnement et des éléments de transport de matière. Cette installation est particulière en ce que toutes ces unités sont disposées sur au moins deux structures en cadre, et au moins un desdits éléments de transport de matière est un élément de transport de matière entre deux structures en cadre et comporte un moyen de rotation autour d'un axe vertical, et/ou un moyen d'inclinaison, et/ou un moyen de variation de sa longueur.

## Description

La présente invention se situe dans le domaine de la production de granulés à partir de matière organique. Elle concerne plus particulièrement une installation de production de granulés.

Il est connu de produire des granulés à partir de matières organiques, de tels granulés pouvant par exemple être utilisés comme combustibles. Les installations de production de ces granulés comprennent habituellement une unité de réception, le cas échéant une unité de mélange, une unité de granulation, une unité de refroidissement et une unité de conditionnement, ainsi que des éléments de transport de matière entre ces unités. Or ces installations sont complexes et volumineuses. Après transport, l'installation ne peut être utilisée que dans un endroit dont la surface au sol et les volumes disponibles sont suffisants pour accueillir l'installation, et/ou que dans un endroit pour lequel l'installation a été spécialement conçue. De plus, l'installation peut ne pas être adaptée si l'on change de type de granulés à produire.

Par exemple, le document EP2845723 décrit une installation de production de granulés montée dans un conteneur. Cette installation nécessite donc d'avoir à disposition un espace correspondant à l'encombrement du conteneur. De plus, l'installation n'est prévue que pour la production d'un seul type de granulés.

Pour résoudre ces inconvénients, on peut imaginer d'adapter l'installation au lieu d'installation. Il est ainsi connu de remplacer certains transporteurs de l'installation pour que l'encombrement au sol soit différent, et mieux adapté à un autre lieu. L'installation peut également être adaptée à la production de différents types de granulés. Il faut alors souvent remplacer certains transporteurs pour permettre de changer certaines unités, ou encore de s'adapter aux types et quantités de matières en entrée. Ces solutions prennent beaucoup de temps à mettre en place et sont très coûteuses, elles sont donc peu utilisées.

La présente invention a pour objet de pallier au moins en partie à ces inconvénients en proposant une installation de production de granulés comportant des structures en cadre modulables, et des éléments de transport de matière pouvant être adaptés à différentes configurations. A cet effet, elle propose une installation de production de granulés à partir de matières organiques, comprenant une unité de réception, le cas échéant une unité de mélange, une unité de granulation, une unité de refroidissement, une unité de conditionnement et des éléments de transport de matière. Cette installation est particulière en ce que toutes ces unités sont disposées sur au moins deux structures en cadre, et au moins un desdits éléments de transport de matière est un élément de transport de matière entre deux structures en cadre et comporte un moyen de rotation autour d'un axe vertical, et/ou un moyen d'inclinaison, et/ou un moyen de variation de sa longueur.

Grâce à ces dispositions, l'installation peut être facilement transportée et installée dans différentes configurations de surface au sol et volume disponibles, du fait de la modularité des structures en cadre, et au fait que les structures en cadre peuvent être positionnées dans différentes positions les unes par rapport aux autres grâce à l'adaptabilité des éléments de transports de matière.

Selon d'autres caractéristiques :
- un desdits éléments de transport de matière peut comporter un moyen d'inclinaison, et/ou un moyen de variation de sa longueur, ce qui rend possible un déplacement vertical et/ou horizontal d'une des deux structures en cadre entre lesquelles l'élément de transport est placé par rapport à l'autre,
- ladite structure en cadre peut être un caisson métallique parallélépipédique comportant une isolation phonique, ce qui constitue un mode de réalisation simple et robuste, permettant de protéger les unités et de limiter les nuisances sonores en fonctionnement,
- ladite structure en cadre peut être une plateforme inférieure, surmontée d'un cadre parallélépipédique, de sorte à permettre de superposer une autre structure en cadre sur ladite structure en cadre, la possibilité de superposer les structures en cadre conférant à l'installation une modularité et une capacité d'adaptation notamment quand il y a peu de place au sol,
- ladite structure en cadre peut comporter au moins un moyen d'accroche lequel est une accroche ampliroll, et/ou une accroche pour levée par chaine ou par câble, et/ou un ensemble de trous pour le passage de fourches, ce qui permet de facilement transporter les structures en cadre, et donc l'installation de production de granulés,
- ladite installation peut comprendre une unité de mélange comportant un module de dosage d'additifs, permettant de réaliser avec précision des recettes de granulés comportant des additifs,
- ladite installation peut comprendre un module de broyage, permettant de réaliser des granulés à partir de matières organiques de dimensions trop importantes ne permettant pas une granulation directe,
- ladite installation peut comprendre une unité de mélange et les unités de réception et de mélange être disposées sur une même structure en cadre, ce qui simplifie le transport et le positionnement relatif de ces deux unités dans l'installation.

La présente invention concerne également une utilisation d'une installation selon l'invention pour fabriquer des granulés biocombustibles à partir de bois feuillus et/ou de bois résineux et de préférence d'au moins un additif.

Grâce à ces dispositions, la fabrication de granulés biocombustibles peut être réalisée par une installation facilement transportable et pouvant être installée dans différentes configurations de surface au sol et volume disponibles.

La présente invention concerne également une utilisation d'une installation selon l'invention pour fabriquer des granulés engrais, à partir de compost et/ou de charbon végétal, et de préférence d'au moins un additif.

Grâce à ces dispositions, la fabrication de granulés engrais peut être réalisée par une installation facilement transportable et pouvant être installée dans différentes configurations de surface au sol et volume disponibles.

La présente invention concerne également une utilisation d'une installation selon l'invention pour fabriquer des granulés pour litière, à partir d'un mélange de copeaux de bois et de paille de blé.

Grâce à ces dispositions, la fabrication de granulés pour litière peut être réalisée par une installation facilement transportable et pouvant être installée dans différentes configurations de surface au sol et volume disponibles.

La présente invention concerne également une utilisation d'une installation selon l'invention pour fabriquer des granulés d'alimentation pour animaux, à partir de pailles d'orge, de colza et de luzerne, préalablement hachées.

Grâce à ces dispositions, la fabrication de granulés d'alimentation pour animaux peut être réalisée par une installation facilement transportable et pouvant être installée dans différentes configurations de surface au sol et volume disponibles.

La présente invention sera mieux comprise à la lecture de la description détaillée qui fait suite, en référence aux figures annexées dans lesquelles :
- La figure 1 est une vue schématique du dessus d'une installation selon un premier mode de réalisation de l'invention.
- Les figures 2 à 5 sont des vues schématiques d'une installation selon un deuxième mode de réalisation de l'invention dans différentes configurations.
- La figure 6 est une vue schématique du dessus d'un élément de transport de matière selon un premier mode de réalisation de l'invention.
- La figure 7 est une vue schématique de côté d'un élément de transport de matière selon un deuxième mode de réalisation de l'invention.
- La figure 8 est une vue schématique de côté d'un élément de transport de matière selon un troisième mode de réalisation de l'invention.
- La figure 9 est une vue en perspective d'un moyen d'accroche selon un mode préféré de réalisation de l'invention.
- La figure 10 est une vue en perspective d'un élément de transport de matière selon un mode de réalisation de l'invention comportant des bandes transporteuses.
- La figure 11 est une vue en perspective d'un élément de transport de matière selon un mode de réalisation de l'invention comportant une vis sans fin.

L'installation selon l'invention permet de produire des granulés 1 à partir de matière organiques 2. L'installation comprend une unité de réception 3, le cas échéant une unité de mélange 4, une unité de granulation 5, une unité de refroidissement 6, une unité de conditionnement 7.

L'installation peut encore comprendre une unité électrogène, permettant de produire de l'électricité de préférence à partir des granulés 1, ou encore à partir de plaquettes combustibles, de fioul, de gaz ou d'huiles organiques. L'unité électrogène permet de conférer une autonomie énergétique de fonctionnement à l'installation.

L'unité de réception 3 peut comprendre un ou plusieurs réservoirs permettant de réceptionner les matières organiques 2 nécessaires à la fabrication des granulés 1.

L'installation peut comprendre un module de broyage-affinage, comprenant par exemple un ou plusieurs broyeurs désintégrateurs, permettant de réduire la taille des matières organiques 2. Ledit module comprend généralement un ou plusieurs broyeurs affineurs, permettant d'affiner la taille des matières organiques 2. Il peut aussi consister en un seul broyeur affineur. Le module de broyage-affinage peut par exemple consister en un ou plusieurs broyeurs à marteaux, à couteaux, centrifuge ou à galets. Le choix de la technologie de broyage-affinage dépend de la nature de la matière organique 2 à traiter. Dans certains cas on peut prévoir l'installation pour traiter deux types de matières différentes, dont chacune ne nécessite qu'une seule opération de broyage-affinage ; on équipe alors le module de broyage affinage de deux machines de broyage-affinage, sans aucun broyeur désintégrateur.

Eventuellement après le broyage, et avant d'être mélangées, les matières organiques 2 peuvent par exemple être de dimensions comprises entre 2 et 5 mm.

L'unité de mélange peut encore comprendre un module de dosage d'additifs, par exemple comprenant une trémie et une vis de transport d'additifs vers le mélangeur. Les additifs peuvent comporter des poudres minérales et/ou organiques.

L'unité de mélange comprend enfin un mélangeur discontinu ou continu, de préférence un mélangeur discontinu. Le mélangeur peut être un mélangeur vertical ou horizontal, de préférence il s'agit d'un mélangeur horizontal, par exemple à hélices à pas contrariés, à pales ou à spire à ruban associée avec des pales. Le mélangeur peut comprendre un système de pesage permettant de contrôler les proportions des différentes matières organiques 2 composant les granulés 1.

L'unité de granulation peut comporter un réservoir tampon et une presse à granuler. Le réservoir tampon peut par exemple être un réservoir fermé tel qu'un silo, une trémie ou une citerne, protégeant le mélange de matières organiques de l'humidité et assurant une quantité de matières suffisantes pour permettre un fonctionnement en continu de la presse à granuler. Le réservoir tampon peut comprendre plusieurs parties aptes à s'additionner, permettant de le rendre extensible pour augmenter le volume de stock tampon.

L'unité de refroidissement peut par exemple comprendre un refroidisseur, un tamiseur permettant d'enlever les particules fines, et un filtre.

L'unité de conditionnement peut par exemple comprendre un ou plusieurs modules de conditionnement en big-bags et/ou en sacs.

L'installation comporte enfin des éléments de transport de matière 8, qui peuvent par exemple être des vis sans fin, des tapis, des élévateurs à godets, des systèmes de transport pneumatique par aspiration ou refoulement.

Les unités 3, 4, 5, 6, 7, 8 sont placées sur au moins deux structures en cadre 9. Dans le cadre de la présente invention, une structure en cadre 9 est une structure permettant de facilement transporter les unités, et de grouper certaines d'entre elles par bloc. La structure en cadre 9 peut être en forme de parallélépipède rectangle. La structure en cadre 9 peut être un châssis, ou un caisson par exemple métallique qui peut optionnellement comporter une isolation phonique, dans lequel sont disposées une ou plusieurs unités 3, 4, 5, 6, 7, 8. Alternativement, la structure en cadre 9 peut comprendre une simple base rectangulaire, sur laquelle sont disposées une ou plusieurs unités 3, 4, 5, 6, 7, 8. Enfin, la structure en cadre 9 peut être une plateforme inférieure, surmontée d'un cadre parallélépipédique, ce qui permet de superposer une autre structure en cadre 9 sur ladite structure en cadre 9.

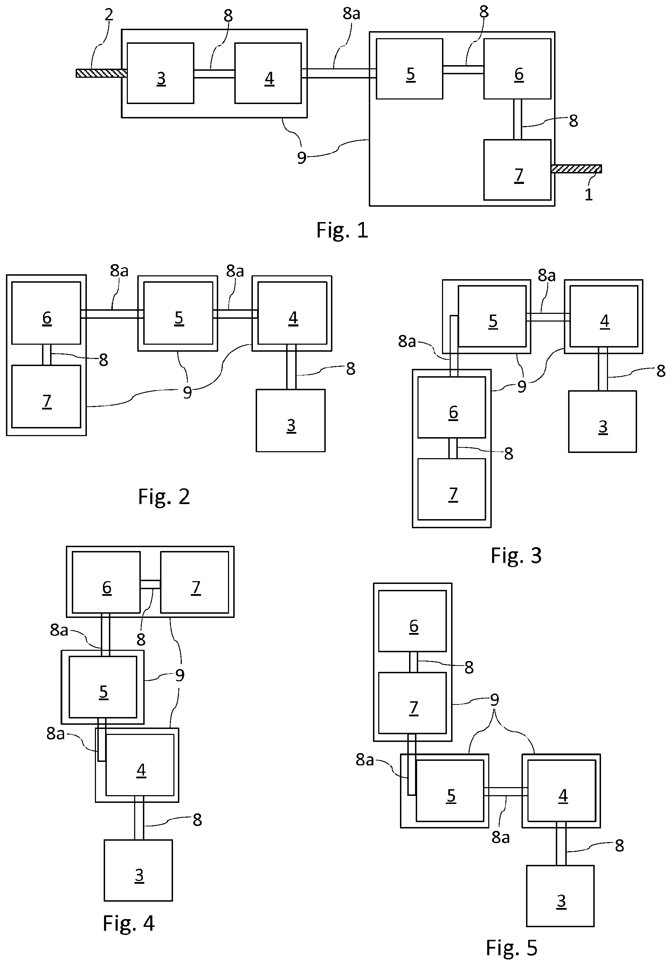

Comme illustré en fig. 1, il peut par exemple être avantageux de disposer les unités de réception 3 et de mélange 4 dans une structure en cadre 9 unique, ces unités étant habituellement placées très proche l'une de l'autre. De même, il peut être avantageux de rassembler les unités de granulation 5 et de refroidissement 6, ou de refroidissement 6 et de conditionnement 7, ou encore de granulation 5, refroidissement 6 et conditionnement 7, comme illustré en fig. 1, dans une structure en cadre 9 unique.

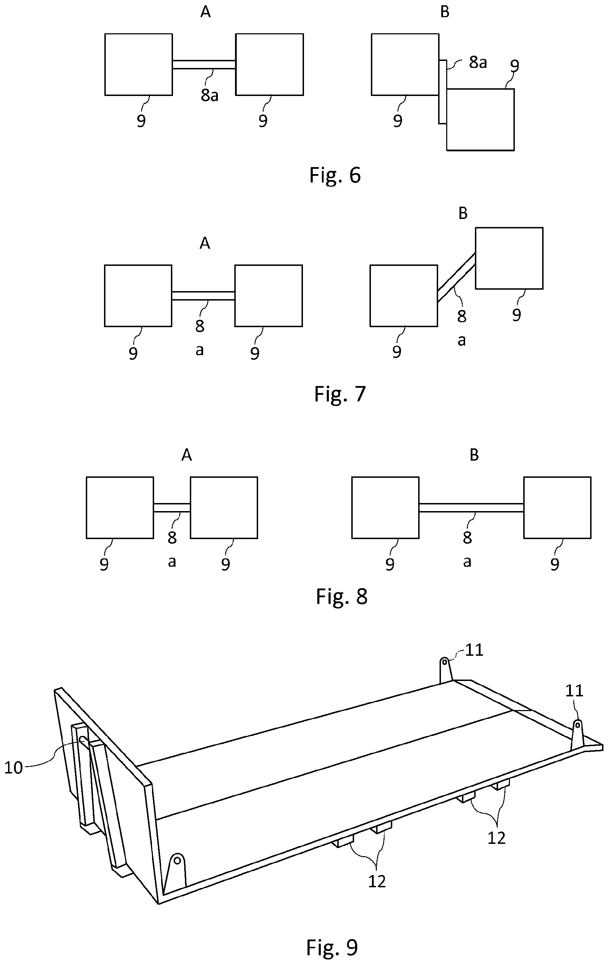

Afin de favoriser son transport et son assemblage dans l'installation, par exemple avec un élément de transport de matière 8, la structure en cadre 9 peut comporter un moyen d'accroche qui peut par exemple être, comme illustré en fig. 9, une accroche ampliroll 10, et/ou une accroche pour levée par chaîne 11 ou par câble et/ou un ensemble de trous 12 pour le passage de fourches.

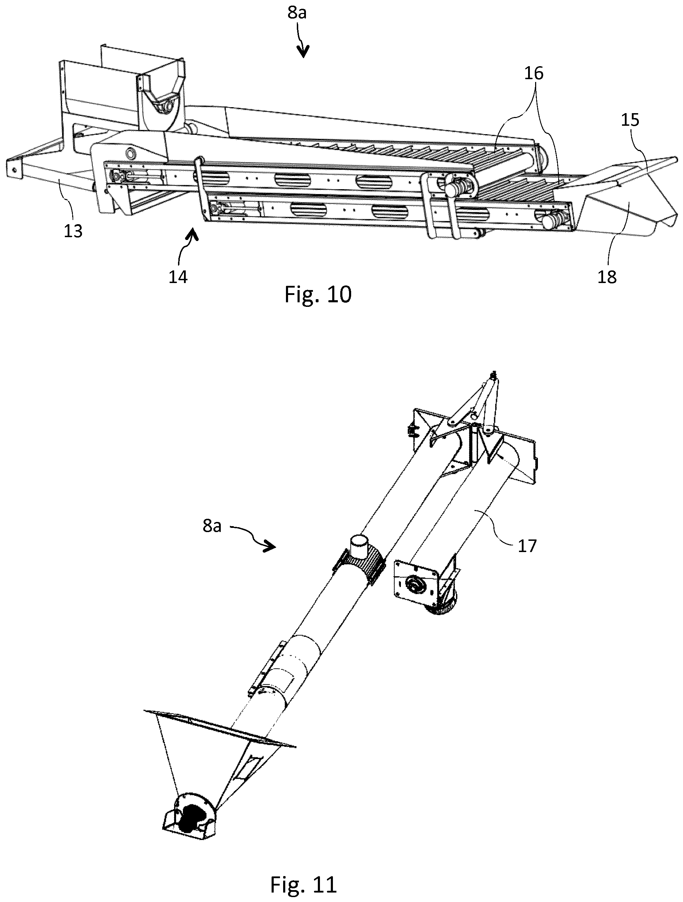

L'installation comporte au moins un élément de transport de matière 8a transportant la matière d'une structure en cadre 9 à une autre structure en cadre 9. L'élément de transport de matière 8a, dont un mode de réalisation est illustré en fig. 10, comporte un moyen de rotation autour d'un axe vertical, et/ou un moyen d'inclinaison, et/ou un moyen de variation de sa longueur.

Dans un premier mode de réalisation, représenté en fig. 6 en vue de dessus, l'élément de transport de matière 8a comporte un moyen de rotation autour d'un axe vertical. Ceci permet qu'une des deux structures en cadre 9 entre lesquelles l'élément de transport de matière 8a est placé puisse être déplacée dans un plan horizontal autour de l'autre des deux structures en cadre 9 entre lesquelles l'élément de transport de matière 8a est placé. La surface au sol occupée par l'installation est donc modulable, comme illustré par les deux configurations A et B de la fig. 6, entre lesquelles une rotation de 90° autour d'un axe vertical a été effectuée. L'axe vertical correspond généralement à la jetée du produit, soit au niveau de la structure en cadre 9 amont sur le début de l'élément de transport de matière 8a, soit de la fin de l'élément de transport de matière 8a vers une unité de la structure en cadre 9 aval.

Pour réaliser un tel moyen de rotation, on peut par exemple disposer un transporteur sur roulettes, ou encore sur une base montée sur un axe vertical rotatif, permettant ainsi de le faire tourner autour de l'axe souhaité. Dans l'exemple représenté fig. 10, on pourrait disposer le châssis de la partie en entrée de transporteur sur une platine rendue mobile en rotation autour d'un axe vertical par exemple par le moyen d'un arbre disposé dans un roulement.

Dans un deuxième mode de réalisation, représenté en fig. 7 en élévation, l'élément de transport de matière 8a comporte un moyen d'inclinaison. Ceci permet qu'une des deux structures en cadre 9 entre lesquelles l'élément de transport de matière 8a est placé puisse être déplacée dans un plan vertical par rapport à l'autre des deux structures en cadre 9 entre lesquelles l'élément de transport de matière 8a est placé, bien entendu dans les limites d'inclinaison possible pour l'élément de transport de matière 8a. Le volume occupé par l'installation est donc modulable, comme illustré par les deux configurations A et B de la fig. 7.

Un exemple de réalisation d'un moyen d'inclinaison peut être un vérin hydraulique disposé à l'extrémité avale d'un transporteur à bande, permettant de soulever cette extrémité plus ou moins. Dans le mode de réalisation de la fig. 10, le moyen d'inclinaison est un vérin 13 disposé à l'extrémité amont d'un transporteur à bande 14 entre un point d'un châssis fixe, et un point solidaire de la structure porteuse de la bande, permettant de soulever l'aval du transporteur, et ainsi faire varier son inclinaison. Alternativement, le moyen d'inclinaison peut être une tringle de longueur réglable disposée entre un châssis et un transporteur à vis, permettant là aussi de modifier l'inclinaison du transporteur à vis. L'élément de transport de matières 8a peut comporter une poignée 15, apte à être supportée par l'unité 3, 4, 5, 6, 7 en aval ou par sa structure en cadre 9. La poignée 15 permet de reprendre une partie de la charge de l'élément de transport de matières 8a lorsqu'il est en position et chargé.

Dans un troisième mode de réalisation, représenté en fig. 8, l'élément de transport de matière 8a comporte un moyen de variation de sa longueur. Ceci permet qu'une des deux structures en cadre 9 entre lesquelles l'élément de transport de matière 8a est placé puisse être déplacée dans un plan horizontal, en faisant varier sa distance par rapport à l'autre des deux structures en cadre 9 entre lesquelles l'élément de transport de matière 8a est placé. La surface au sol occupée par l'installation est donc modulable, comme illustré par les deux configurations A et B de la fig. 8.

Un exemple de réalisation d'un moyen de variation de la longueur, est représenté en fig. 10. Il s'agit d'un transporteur à bande comportant deux bandes 16 superposées, et mobiles en translation longitudinale l'une par rapport à l'autre. Comme illustré en fig. 10, la translation peut être effectuée par un système de roulettes et de rails. Un autre exemple consiste en une vis en deux parties, dont une partie 17 peut être escamotée (longueur plus courte) ou non (longueur plus longue) par l'action d'une tringle ou d'un vérin, comme représenté en fig. 11.

Il peut être avantageux de combiner les modes de réalisation des fig. 6, 7 et 8, afin d'augmenter la modularité de l'installation. L'élément de transport de matière 8a peut par exemple comporter un moyen de rotation autour d'un axe vertical et un moyen d'inclinaison, ou un moyen de rotation autour d'un axe vertical et un moyen de variation de sa longueur, ou comme représenté en fig. 10, un moyen d'inclinaison et un moyen de variation de sa longueur.

Dans le mode de réalisation préféré de l'invention, l'élément de transport de matière 8a comporte un moyen de rotation autour d'un axe vertical, un moyen d'inclinaison et un moyen de variation de sa longueur. Ceci permet de pouvoir adapter au mieux l'installation à différentes configurations de surface au sol et de volume disponible pour l'installation.

L'élément de transport de matière 8a peut également comporter une goulotte 18 à son extrémité aval, permettant de guider les matières dans l'unité 3, 4, 5, 6, 7 située en aval.

L'invention permet d'obtenir une installation préfabriquée, dans laquelle les unités 3, 4, 5, 6, 7 sont montées dans des structures en cadre 9 avant d'être transportées puis assemblées sur le site de production des granulés 1.

L'installation selon l'invention peut être utilisée pour produire différents types de granulés 1, en fonction notamment des matières organiques 2 introduites en entrée.

### Exemple 1

Des granulés biocombustibles peuvent être obtenus à partir de plaquettes de bois feuillus, de sciure de bois résineux et de préférence d'au moins un additif.

Les matières organiques 2 sont réceptionnées et chargées sur les trémies de réception de matières, par exemple d'une capacité de 15 m³ chacune. Le taux d'humidité des matières organiques 2 est par exemple de l'ordre de 12%. L'installation peut alors comprendre un broyeur à marteaux désintégrateur suivi d'un broyeur à marteaux affineur pour obtenir des particules préférentiellement comprises entre 2 et 5mm. L'opération de broyage affinage peut se faire de manière séquentielle, plaquettes de feuillus, puis sciure de bois résineux, ou le contraire. Par exemple, pour un procédé de granulation dont la presse a une capacité de 1000 kg/h, on peut mélanger 495 kg de bois de plaquettes feuillus, 495 kg de sciure de bois résineux et 10 kg d'additifs sous formes de poudres. On peut utiliser un mélangeur à spires à pas contrariés d'une capacité de 3 m³, doté d'un système de pesage, permettant de contrôler avec précision les taux de matières organiques 2 et d'additifs à mélanger, et d'homogénéiser le mélange. Le mélange obtenu peut être acheminé vers une trémie de stock tampon d'une capacité de 9 m³, puis par une vis de transport matières, vers la presse à granulés d'une capacité de 1000 kg/h.

### Exemple 2

Des granulés engrais peuvent être obtenus à partir de compost et de charbon végétal.

Les matières organiques sont réceptionnées et chargées sur les trémies de réception de matières, par exemple d'une capacité de 30 m³ chacune. On peut mélanger 1600 kg de compost avec 400 kg de charbon végétal. Un mélangeur à spires à pas contrariés d'une capacité de 6 m³, doté d'un système de pesage, peut être utilisé afin de pouvoir contrôler avec précision les taux de matières à mélanger et d'homogénéiser le mélange. Puis le mélange peut être acheminé vers une trémie de stock tampon d'une capacité de 18 m³. Enfin ce mélange de matières peut être acheminé, par une vis de transport matières, vers la presse à granulés d'une capacité de 2000 kg/h.

### Exemple 3

Des granulés pour litière peuvent être obtenus à partir d'un mélange de copeaux de bois et de paille de blé.

On peut mélanger 500 kg de copeaux de bois avec 500 kg de paille de blé. Après le broyage-affinage, ces matières peuvent passer dans un mélangeur à spires à pas contrariés d'une capacité de 3 m³, doté d'un système de pesage, pour homogénéiser le mélange. Puis le mélange obtenu peut être acheminé vers une trémie de stock tampon d'une capacité de 9 m³. Ensuite ce mélange de matières peut être acheminé, par une vis de transport matières, vers la presse à granulés d'une capacité de 1000 kg/h.

### Exemple 4

Des granulés d'alimentation pour animaux peuvent être obtenus à partir de pailles d'orge, de colza et de luzerne, préalablement hachées.

Ces matières végétales peuvent subir au préalable une opération de hachage, pour réduire leurs tailles, avant leur réception dans les trémies de réception de matières. Après le broyage-affinage, ces matières peuvent passer dans un mélangeur à spires à pas contrariés pour homogénéiser le mélange. Le mélange obtenu peut être acheminé vers une trémie de stock tampon. Ensuite ce mélange de matières peut être acheminé, par une vis de transport matières, vers la presse à granulés.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Installation de production de granulés (1) à partir de matières organiques (2), comprenant une unité de réception (3), le cas échéant une unité de mélange (4), une unité de granulation (5), une unité de refroidissement (6), une unité de conditionnement (7) et des éléments de transport de matière (8), **caractérisée en ce que** toutes ces unités (3, 4, 5, 6, 7) sont disposées sur au moins deux structures en cadre (9), et au moins un desdits éléments de transport de matière (8) est un élément de transport de matière (8a) entre deux structures en cadre (9) et comporte un moyen de rotation autour d'un axe vertical, et/ou un moyen d'inclinaison, et/ou un moyen de variation de sa longueur.

2. Installation selon la revendication précédente, dans laquelle le au moins un desdits éléments de transport de matière (8a) comporte un moyen d'inclinaison, et/ou un moyen de variation de sa longueur.

3. Installation selon l'une des revendications précédentes, dans laquelle ladite structure en cadre (9) est un caisson métallique parallélépipédique, de préférence comportant une isolation phonique.

4. Installation selon l'une des revendications 1 ou 2, dans laquelle ladite structure en cadre (9) est une plateforme inférieure, surmontée d'un cadre parallélépipédique, de sorte à permettre de superposer une autre structure en cadre (9) sur ladite structure en cadre (9).

5. Installation selon l'une des revendications précédentes, dans laquelle ladite structure en cadre (9) comporte au moins un moyen d'accroche lequel est une accroche ampliroll (10), et/ou une accroche pour levée par chaine ou par câble (11), et/ou un ensemble de trous (12) pour le passage de fourches.

6. Installation selon l'une des revendications précédentes, comprenant une unité de mélange (4) comportant un module de dosage d'additifs.

7. Installation selon l'une des revendications précédentes, comportant un module de broyage-affinage.

8. Installation selon l'une des revendications précédentes, comprenant une unité de mélange (4), et les unités de réception (3) et de mélange (4) sont disposées sur une même structure en cadre.

9. Utilisation d'une installation selon l'une des revendications précédentes pour fabriquer des granulés biocombustibles (1) à partir de bois feuillus et/ou de bois résineux, et de préférence d'au moins un additif.

10. Utilisation d'une installation selon l'une des revendications 1 à 8 pour fabriquer des granulés engrais (1), à partir de compost et/ou de charbon végétal, et de préférence d'au moins un additif.
